# EUROPEAN PATENT APPLICATION

(11) **EP 1 655 692 A1**
(43) Date of publication of application: **10.05.2006**
(21) Application number: 05022801.4
(22) Date of filing: 19.10.2005
(51) Int. Cl.: G06K 19/077, H01Q 1/22

(54) **RF tag holding structure**

(30) Priority: 09.11.2004 JP 2004325380
(71) Applicant: Toshiba TEC Kabushiki Kaisha, Shinagawa-ku Tokyo 141-8664 (JP)
(72) Inventor: Oishi, Sadatoshi c/o I.P.D. Toshiba TEC Corp., Shinagawa-ku, Tokyo,141-8664 (JP); Kato, Masakuzu c/o I.P.D. Toshiba TEC Corp., Shinagawa-ku, Tokyo,141-8664 (JP)
(74) Representative: Kramer - Barske - Schmidtchen

(57) **Abstract**

There is disclosed an RF tag holding structure that can maintain sufficient performance of data-reading from an RF tag (2) when the structure mounting a commercially available RF tag (2) is attached to an article (12), or even if a number of planar articles (12) each carrying an RF tag (2) are closely arranged sideways so as to face each other on its planar surface. A narrow rectangular thru-opening (3) is formed on a side of one longer edge line of a holding member (1), wherein the rectangular thru-opening (3) is provided in such a size that an IC chip (21) and antenna (22) in the RF tag (2) can be disposed in the air space of the thru-opening. A supporting part for holding the RF tag within the thru-opening is formed on the internal circumference of the thru-opening of the holding member (1) such that the RF tag is supported so as not to overlap an antenna on a substrate in the thru-opening direction.

## Description

The present invention generally relates to a holding structure for an RF tag that radio communicates using radio waves, for example, in micro wave band or VHF/UHF bands. The invention particularly relates to a holding structure for an RF tag used being attached to an article.

Among structures designed to hold and protect so-called RF tags such as RFID tag, contact-free IC card, IC data carrier, there has conventionally been known, for example, a protective structure as disclosed in Japanese patent application Kokai publication No. 2004-240881, which can prevent adverse affect caused by heat by covering an IC data carrier with a heat resisting material where the structure is mounted to an article that is directly heated at a high temperature.

There has been a problem with such a protective structure, however, that, when it is used holding an RF tag in it that uses radio waves in 2.4 GHz band or 900 MHz band, the resonance frequency of an RF tag antenna likely drifts affected by the dielectric constant of the heat resisting material that is used and hence data reading from the RF tag is degraded. In addition, when data reading is performed in such a state that many of articles such as an envelope, to each of which a commercially available RF tag is mounted at a predetermined position thereof, are closely arranged sideways facing each other, the antennas of the respective RF tags mutually interfere because the RF tags are disposed too close to each other, resulting in degradation of data reading.

An object of the present invention is to provide an RF tag holding structure that can sufficiently maintain performance of data-reading from an RF tag when the structure mounting a commercially available RF tag is attached to an article, or even if a number of articles each carrying a commercial RF tag within such a structure are closely arranged sideways with its planar surface facing each other. The RF tag holding structure of the present invention comprises a holding member in which a thru-opening in a size that the RF tag can fit in is formed, and a supporting part formed within the thru-opening for holding the RF tag, wherein the supporting part supports the RF tag substrate in a position where the supporting part does not overlap an antenna on a substrate in the thru-opening direction within the thru-opening.
FIG. 1 is an exploded perspective view of a holding structure in the first embodiment according to the present invention.
FIG. 2 is a cross sectional view taken along line A-A in FIG. 1.
FIG. 3 is a perspective view generally illustrating how data-reading from RF tags is performed when the multiple holding structures in the first embodiment according to the present invention are attached to articles.
FIG. 4 is an exploded perspective view of a holding member in the second embodiment according to the present invention.
FIG. 5 is a cross sectional view taken along line B-B in the invention shown in FIG. 4.

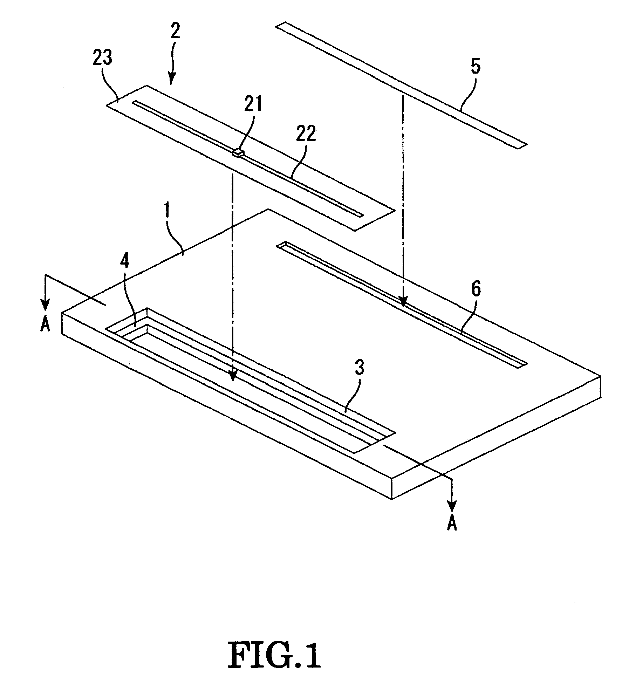

The first embodiment of the present invention will be described in reference to the accompanying drawings. In FIG. 1, reference numeral 1 denotes a holding member of a rectangular plane that constitutes a main body of the holding structure of the present invention. A thru-opening or a penetrating-opening 3 for fitting an RF tag 2 therein is formed on a side of one longer edge line of the aforementioned holding member 1. For the folding member 1, a resin such as ABS is preferable to use.

The RF tag 2 is one that can be generally available in the market and is integrated into a body in which an IC chip 21 and antenna 22 are arranged on a substrate 23, forming a narrow rectangular as a whole. The thru-opening 3 is formed in a narrow rectangular so as to fit therein the substrate 23 of the RF tag 2 and is arranged so that its longer edge lines that partially form the internal circumference are roughly parallelized with one of the longer edge lines of the holding member 1. In this embodiment, the size of the thru-opening 3 is formed in suit with the size of the substrate of the RF tag 2. However, the size and form of the thru-opening need not be restricted to one as described. For example, the thru-opening 3 may be formed larger than that of the RF tag substrate and partially penetrated such that the RF tag substrate is supported by a step or protrusions extended from the internal circumference of the thru-opening.

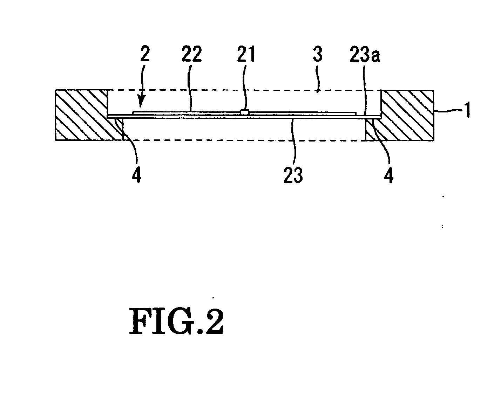

As shown in FIG. 2, in the thru-opening 3 there is formed a step line along the internal circumference of the thru-opening in the intermediate portion of the internal circumference in the thru-opening direction, for example, roughly in the vertical middle of the internal circumference. This step line constitutes a supporting part 4 that supports a marginal part 23a of the substrate 23 of RF tag 22 where the antenna 22 is not disposed. For example, if the holding member 1 is about 1 millimeter in thickness, the supporting part is formed at a position of about 0.5 millimeter down from the surface of the holding member 1. The supporting part 4 for supporting the RF tag is provided so as not to overlap an antenna 22 provided on a substrate 23 in the thru-opening direction within the thru-opening. In addition, the thickness of the holding member 1 is made to be greater than that of the antenna 22 of the RF tag 2.

In this embodiment, the supporting part 4 is formed by the step line formed continuously along the internal circumference of the thru-opening 3. However, formation of the supporting part need not be restricted to such a structure. It may be constituted by several parts that are discontinuously formed along the internal circumference of the thru-opening 3. It may also be made using a protrusion or protrusions, instead of such a step line or step parts, which are formed along the circumference of the thru-opening 3 continuously or discontinuously.

A groove 6, into which a reflector 5 used in combination with antenna 22 of the RF tag 2 is fit, is formed on a side of the other longer edge line in the holding member 1 in roughly parallel with the longer edge lines that define the internal circumference of the thru-opening 3. This reflector 5 may be, for example, a metallic tape. The thickness of the metallic tape can be a degree of several hundreds µm. The depth of the groove 6 is at least such a degree that a surface of the reflector does not protrude above the surface of the holding member 1. The reflector 5 is not necessarily needed. If the reflector is not used, the groove 6 becomes unwanted accordingly.

In this RF tag holding structure, the substrate 23 of the RF tag 2 is inserted into thru-opening 3 of the holding member 1 from the top, and the marginal part 23a of the substrate 23 of the RF tag 2 is adhered and fixed to the supporting part 4, for example, using an adhesive. A reflector 5 is also inserted into the groove 6 and adhered and fixed, for example, using an adhesive. In this way, as shown in FIG. 2, air spaces are formed above and below the antenna 22 of the RF tag 2 within the thru-opening 3. That is, the RF tag 2 is held by the supporting part 4 within the thru-opening and the antenna 22 of the RF tag 2 is prevented from contacting the holding member 1. Thus, shifting of a resonance frequency of the antenna 22 of the RF tag 2 affected by dielectric constant of the holding member 1 can be substantially prevented.

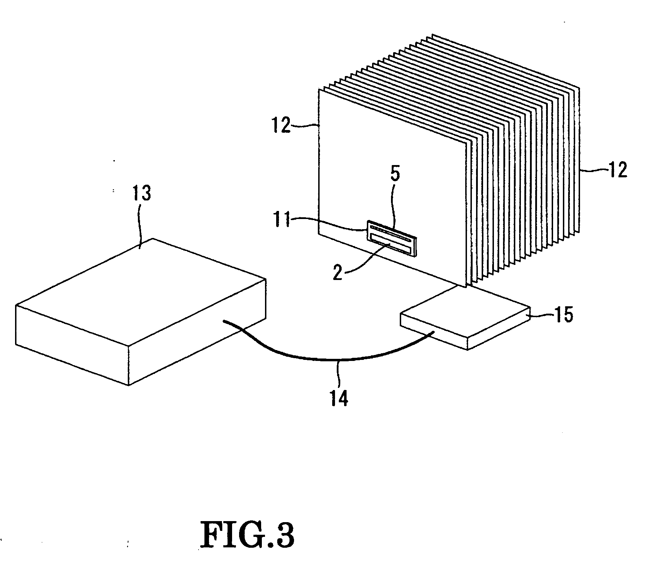

The holding structure 11 to which the RF tag 2 and reflector 5 are installed in this manner is affixed to an article 12 such as an envelope at a predetermined position on the planar surface of it, as shown in FIG. 3. A number of such articles holding the holding structure 11 are contained and laterally arranged within a container (not shown) so as to superimpose and face each other on its planar surface of the article 12. In order to perform telecommunication for data-writing and reading to/from the RF tags 2 of the articles 12 thus arranged, for example, a planar antenna 15 connected to an interrogator 13 via a coaxial cable 14 is disposed below the articles so as to direct orthogonal to the arrangement direction of the articles 12, as shown in FIG. 3.

In such a structure, even if articles 12 are arranged with one superimposed with another and neighboring ones contacting each other, there can be provided by the holding structure 11 air gaps at a predetermined distance between the antennas 22 of the respective RF tags 2. Thereby, resonance frequencies of the respective antennas hardly become subject to environmental affection, and hence, performance of data-reading from the respective RF tags 2 can be sufficiently maintained. Accordingly, excellent communications can be performed between the planar antenna 15 and the RF tags 2 of all the articles 12, and thus secure data-reading and writing from/to the RF tags can be achieved.

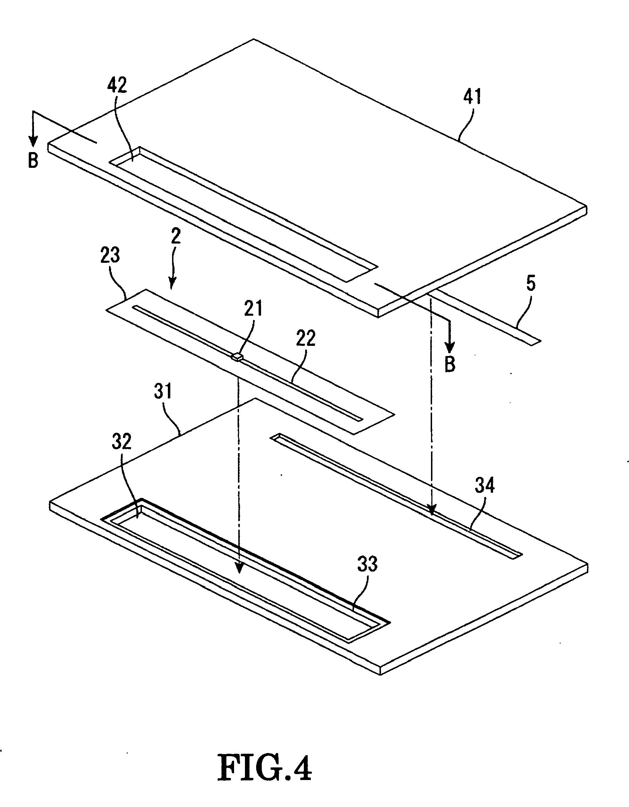

The second embodiment of the present invention will be described in reference to the accompanying drawings. In this embodiment, like parts as in the preceding embodiment are accorded the same reference numerals, and detailed descriptions for them will be omitted accordingly. As shown in FIG. 4, a narrow rectangular penetrating-opening 32 is formed on a side of one longer edge line of the aforementioned holding member 31, wherein the rectangular penetrating-opening 32 is provided in such a size that an IC chip 21 and antenna 22 in the RF tag 2 can be disposed in the air space of the penetrating-opening. Also, a groove 33 is formed in the circumference of the penetrating-opening in the holding member 31 so that the marginal part 23a of the substrate 23 of the RF tag 2 can be engaged in the groove. The thickness of the holding member 31 is made to be greater than the thickness of the antenna 22 of the RF tag 2.

A groove 34 into which a reflector 5 is fit is formed on a side of the other longer edge of the holding member 31 in roughly parallel with the longer edge lines constituting the circumference of the penetrating-opening 32. For this holding member 31, a resin such as ABS is preferred.

Reference numeral 41 denotes a laminating member having the same shape and the same size as those of the holding member 31. In this laminating member 41, a penetrating-opening 42 having the same shape and the same size as those of the holding member 31 is formed in the position corresponding to that in the holding member 31. For the laminating member 41, the same material as the holding member 31, for example, ABS is preferred to use. The thickness of the laminating member 41 is made to be greater than the thickness of the antenna 22 of the RF tag 2.

This RF tag holding structure is so designed that the laminating member 41 is placed over the holding member 31 in a state that the penetrating-opening 32 is totally fit on another penetrating-opening 42 and thereafter the two members are fixed using, for example, an adhesive.

Before the laminating member 41 is placed over the holding member 31, the marginal part of the substrate 23 of the RF tag 2 is fit in the groove 33 of the holding material 31 and they are fixed using, for example, an adhesive. Then, the reflector 5 is inserted into the groove 34 and adhered thereto.

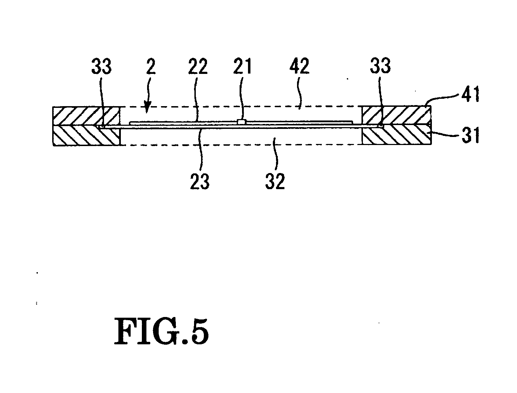

After the RF tag 2 and reflector 5 are installed in the holding member in this manner, the laminating member 41 is placed on top of the holding member 31 and stuck together using an adhesive. Thus, air spaces are formed above and below the antenna 22 of the RF tag 2 by the penetrating-openings 42 and 32, respectively, as shown in FIG. 5. The IC chip 21 and antenna 22 of the RF tag 2 are situated within a hole-space formed by penetrating-openings 42 and 32. Thus, the structure can prevent the antenna 22 from contacting the holding member 31 or laminating member 41, and hence it substantially prevents shifting of the resonance frequency of the antenna 22 of the RF tag 2 affected by the dielectric constants of the holding member and laminating member 41.

When such a structure incorporating an commercially available RF tag is used being attached to multiple articles, the resonance frequencies of antennas of the respective RF tags hardly become subject to environmental affection because one antenna would not touch with other articles, as in the first embodiment, and hence performance of data-reading from the respective tags can be sufficiently maintained. Accordingly, even if a number of planar articles with this holding structure 11 attached thereto are laterally arranged each facing and superimposing another on its planar surface, reading and writing from/to the RF tags 2 of all the articles can be assuredly performed. In this embodiment, the description was made that the groove into which the RF tag 2 is inserted is provided on the side of the holding member. However, such a groove may be formed on the side of the laminating member or on both sides of the holding member and laminating member without restricting the structure to the earlier described one.

It is explicitly stated that all features disclosed in the description and/or the claims are intended to be disclosed separately and independently from each other for the purpose of original disclosure as well as for the purpose of restricting the claimed invention independent of the compositions of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A holding structure for holding an RF tag (2) including a substrate on which an IC chip and an antenna are mounted, comprising:
a holding member (1) having a thru-opening (3); and
a supporting member (4) provided at a circumferential wall of the thru-opening for supporting the RF tag substrate (23) such that the RF tag is housed within the thru-opening (3) in its penetrating direction,
wherein the supporting member (4) is formed so as to support the RF tag (2) without overlapping the antenna (22) on the substrate (23) in the penetrating direction.

2. A holding structure according to claim 1, wherein the supporting member (4) is formed in an intermediate portion of the circumferential wall of the thru-opening (3).

3. A holding structure according to claim 1, wherein the supporting member (4) is formed along the circumferential wall of the thru-opening (3).

4. A holding structure according to any one of claims 1 to 3, wherein the holding member (1) includes a groove (6) into which a reflector (5) to be used in combination with the RF tag antenna (22) is embedded.

5. An RF tag module comprising :
an RF tag (2) including a substrate (23) on which an IC chip (21) and an antenna (22) are mounted, the RF tag (2) receiving and transmitting a signal through the antenna (22); and
a holding member (1) including a thru-opening (3) and a supporting member (4) at a circumferential wall of the thru-opening (3) for supporting the RF tag substrate (23) such that the RF tag (2) is housed within the thru-opening (3) in its penetrating direction,:
wherein the supporting member (4) is formed so as to support the RF tag (2) without overlapping the antenna (22) on the substrate (23) in the penetrating direction.

6. An RF tag module according to claim 5, wherein a thickness of the holding member (1) is greater than that of the RF tag antenna (22).

7. An RF tag module according to claim 5 or 6, wherein the RF tag module includes a reflector (5) and the holding member (4) has a groove (6) into which the reflector is embedded.

8. A holding structure for supporting an RF tag (2) including a substrate (23) on which an IC chip (21) and an antenna (22) are mounted, comprising:
a holding member (1) having a first penetrating-opening (32) within which the RF tag substrate (23) is to be held; and
a laminating member (41) including a second penetrating-opening (42) that is formed in the same shape as the first penetrating-opening (32) and disposed at a position corresponding to the first penetrating-opening, the laminating member being stacked on the holding member (1) so that both penetrating-openings are matched in their positions,
wherein the holding member (1) and the laminating member (41) both supports the RF tag (2) in the state that circumferential edges of the first and second penetrating-openings do not interfere with the antenna (22) on the substrate in the penetrating direction.

9. A holding structure according to claim 8, wherein at least one of the holding member (1) and the laminating member (41) includes a groove (33) into which a reflector (5) to be used in combination with the RF tag antenna is embedded.

10. An RF tag module comprising:
an RF tag (2) including a substrate (23) on which an IC chip (21) and an antenna (22) are mounted, the RF tag (2) receiving and transmitting a signal through the antenna (22);
a holding member (1) having a first penetrating-opening (32) within which the RF tag substrate (23) is held; and
a laminating member (41) including a second penetrating-opening (42) that is formed in the same shape as the first penetrating-opening and disposed at a position corresponding to the first penetrating-opening, the laminating member being stacked on the holding member so that both penetrating-openings are matched in their positions,
wherein the RF tag (2) is sandwiched between the holding member (1) and the laminating member (41) in the state that circumferential edges of the first and second penetrating-openings do not interfere with the antenna on the substrate in the penetrating direction.

11. An RF tag module according to claim 10, wherein a thickness of the holding member (1) and the laminating member (41) stacked on the holding member is greater than that of the RF tag antenna.

12. An RF tag module according to claim 10 or 11, wherein at least one of the holding member (1) and the laminating member (41) includes a groove (33) into which a reflector (5) is embedded.
